**Europäisches Patentamt**

**European Patent Office**

**Office européen des brevets**

(11) Veröffentlichungsnummer: **0 154 161**
**A1**

(12) **EUROPÄISCHE PATENTANMELDUNG**

(21) Anmeldenummer: **85101026.4**

(22) Anmeldetag: **01.02.85**

(51) Int. Cl.⁴: **G 04 G 15/00**
**G 11 B 15/44**

(30) Priorität: **22.02.84 DE 3406280**

(43) Veröffentlichungstag der Anmeldung:
**11.09.85. Patentblatt 85/37**

(84) Benannte Vertragsstaaten:
**DE FR GB IT NL SE**

(71) Anmelder: **Deutsche Thomson-Brandt GmbH**
**Hermann-Schwer-Strasse 3**
**D-7730 Villingen-Schwenningen(DE)**

(72) Erfinder: **Zimmermann, Horst**
**Am Elsenberg 16**
**D-7730 VS-Marbach(DE)**

(54) **Einrichtung zum automatischen Rückspulen zur Wiedergabe von Timer-Aufnahmen eines Video- und/oder Audio-Recorders.**

(57) Einrichtung eines Video- und/oder Audio-Recorders für die automatische Rückspulung des Magnetbandes an den Beginn von Timer-Aufnahmen. Die Einrichtung ermöglicht es durch die logische Verknüpfung von Bandzähler, Zwischenspeicher, Vergleicher, den Timern und einem zugeordneten Startschalter für die Timer-Funktion durch binär arbeitende Verknüpfungsglieder, daß nach Beendigung der Timer-Funktion das Band automatisch an den Beginn der ersten Timer-Aufnahme zurückgespult und gestopt wird sowie das Gerät nunmehr bereit ist für eine Wiedergabe.

Deutsche Thomson-Brandt GmbH
Postfach 2060
7730 Villingen-Schwenningen
**0154161**
6. Februar 1984
T-PA 482

/

## PATENTANMELDUNG

--------------------------------------------------------

Einrichtung zum automatischen Rückspulen zur Wiedergabe von Timer-Aufnahmen eines Video- und/oder Audio-
Recorders.

--------------------------------------------------------

Die Erfindung betrifft eine Einrichtung gemäß dem
Oberbegriff des Anspruchs.

Es ist bereits bekannt Video-Recorder mit Timern auszustatten, die es erlauben, so vorprogrammiert zu werden,
daß sie den Recorder zu einer Reihe von Sendungen verschiedener Sender zu unterschiedlichen Zeiten für Aufnahmen einschalten und auch wieder abschalten. Das Gerät
bleibt zu diesem Zweck nach dem Programmieren der Timer
in einer Bereitschaftsstellung bis die Timerfunktionen
abgearbeitet sind und die Aufnahmen durchgeführt wurden.

Bandzähler sind bei Tonbandgeräten und Videorecordern
allgemein bekannt. Sie zählen meist vorwärts und rückwärts
in Abhängigkeit vom Bandtransport und müssen bei Einlegen
einer Bandkassette auf Null gestellt werden.

- 4 -

Deutsche Thomson-Brandt GmbH
Postfach 20 60
7730 Villingen-Schwenningen
6. Februar 1984
T-PA 462

**0154161**

2

Wenn der Benutzer des Gerätes die Timer-Aufnahmen abhören will, muß er entsprechend der Aufnahmedauer bis
an deren Beginn nach Bandzähler zurückspulen, d.h. er
muß sich den Zählerstand vor dem Beginn von Timer-Aufnahmen gemerkt haben. Wenn er das vergißt, muß er den
Anfang mühsam suchen.

Der Erfindung lag die Aufgabe zu grunde, einen Video-
oder Audio-Recorder so auszustatten, daß er durch eine
entsprechende Einrichtung selbsttätig nach durchgeführten
Timer-Aufnahmen den Anfang derselben durch automatisches
Rückspulen wiederfindet und erst dann abgeschaltet wird.

Diese Aufgabe wird für den angegebenen Oberbegriff des
Anspruchs erfindungsgemäß nach seinem Kennzeichen gelöst.
Einzelheiten sind einer nachfolgenden Beschreibung zu
entnehmen.

Erfindungsgemäß ist eine Einrichtung vorgesehen, die eine
logische Funktionsverknüpfung für folgende Baugruppen bietet:

- Bandlängenzähler bzw. Bandrestmengenzähler,
- Zwischenspeicher,
- mehrere Timer,
- Vergleicher,
- sowie logische Verknüpfungsglieder.

Durch die vorteilhafte Ausbildung der Einrichtung kann der
Benutzer nach Eingabe seiner Programmwünsche in den oder die
Timer des Recorders diesen in Bereitschaft schalten und

Deutsche Thomson-Brandt GmbH
Postfach 2060
7700 Villingen-Schwenningen

**0154161**

6. Februar 1984
T-PA 462

3

damit die Timer-Funktion aktivieren. Es geschieht dann
vollautomatisch folgendes: Der Stand des Bandes wird vom
Bandzähler erfaßt und im Zwischenspeicher festgehalten.
Es folgen nun die Timer-Aufnahmen gemäß Eingabe. Nach
Beendigung der letzten Timer-Aufnahme wird das Rückspulen
begonnen bis der nun rückwärts laufende Bandzähler den
gleichen Stand erreicht hat wie er zwischengespeichert
wurde. In diesem Moment wird der Rückspulvorgang gestoppt
und das Gerät ausgeschaltet. Der irgendwann zurückkehrende
Benutzer findet  das Gerät so vor, daß er ohne jedes
Suchen und Überlegen nach Einschalten des Gerätes auf
Wiedergabe die erste der aufgenommenen Timer-Aufnahmen
abhören kann.

Nachfolgend wird ein Ausführungsbeispiel der Erfindung an
hand eines Blockschaltbildes beschrieben.
Eine Einrichtung zur automatischen Rückspulung der Magnetbandkassette eines Recorders für Bild und/oder Ton an den
Beginn einer oder mehrerer, vorangegangener Timer-Aufnahmen
arbeitet beispielsweise mit drei Timern 5, 6, 7 die mit den
Eingängen eines NOR-Getters 4 verbunden sind. Ein Schalter 1
dient zum Start der Timer- Funktion, indem er mit einem Inverter 2 verbunden ist. Wenn der Schalter 1 eingeschaltet
wird, gibt der Inverter 2 ein H-Signal sowohl an ein Monoflop
8 wie auch an den einen Eingang eines UND-Gatters 3. Der
Monoflop 8 gibt daraufhin einen kurzen Impuls als Ladebefehl
für einen angeschlossenen Zwischenspeicher 9 ab, der den
momentanen Zählerstand des Bandlängenzählers 11  einspeichert
und damit festhält. Am zweiten Eingang des UND-Gatters 3
ist der Ausgang des NOR-Getters 4 angeschlossen. Nach dem

Deutsche Thomson-Brandt GmbH
Postfach 20 60
7730 Villingen-Schwenningen

6. Februar 1981

T-PA 482

4

0154161

Einschalten des Schalters 1 und gleichzeitiger Auslösung der Timer-Funktion ist bis zur Abarbeitung
der Timer einer im Betrieb. Dadurch ist solange am
Ausgang des NOR-Gatters 4 ein L-Signal. Folglich
bleiben die UND-Gatter 3 und die diesem nachfolgenden UND-Gatter 12 und 13 gesperrt. Erst wenn der
letzte Timer abgearbeitet ist, entsteht am Ausgang
des NOR-Gatters ein H-Signal, das über das UND-Gatter
3 auch an die Eingänge der UND-Gatter 12 und 13 gelangt.
Es ist weiterhin ein Vergleicher 10 vorgesehen, der an
seinem Eingang A den momentanen Zahlenwert des Bandlängenzählers 11 und an seinem Eingang B den abgespeicherten Zahlenstand des Beginns der ersten Timer-
Aufnahme. Nach Ende der letzten Timer-Aufnahme wird
das UND-Gatter 12 vom A≠B-Ausgang mit einem H-Signal
versehen und so die Rückspulung über das UND-Gatter 12
ausgelöst. Sobald der Betrag von A=B ist, entsteht an diesem
Ausgang des Vergleichers 10 ein H-Signal und über das
UND-Gatter 13 wird der Stopbefehl gegeben. Gleichzeitig
wird das UND-Gatter 12 gesperrt, da es vom A≠B-Ausgang
ein L-Signal erhält. Der Bandlängenzähler 11 läuft
während des Rückspulens selbstverständlich rückwärts.
Wenn der Schalter 1 ausgeschaltet wird bei Wiedergabe
der automatisch durchgeführten Timer-Aufnahmen, gibt der
Inverter 2 ein L-Signal ab und ebenso das UND-Gatter 3
und als Folge die UND-Gatter 12 und 13. Damit wird der
Vergleicher 10 wirkungslos.

Deutsche Thomson-Brandt GmbH
Postfach 20 60
7730 Villingen-Schwenningen
30. Januar 1985

T-PA 482

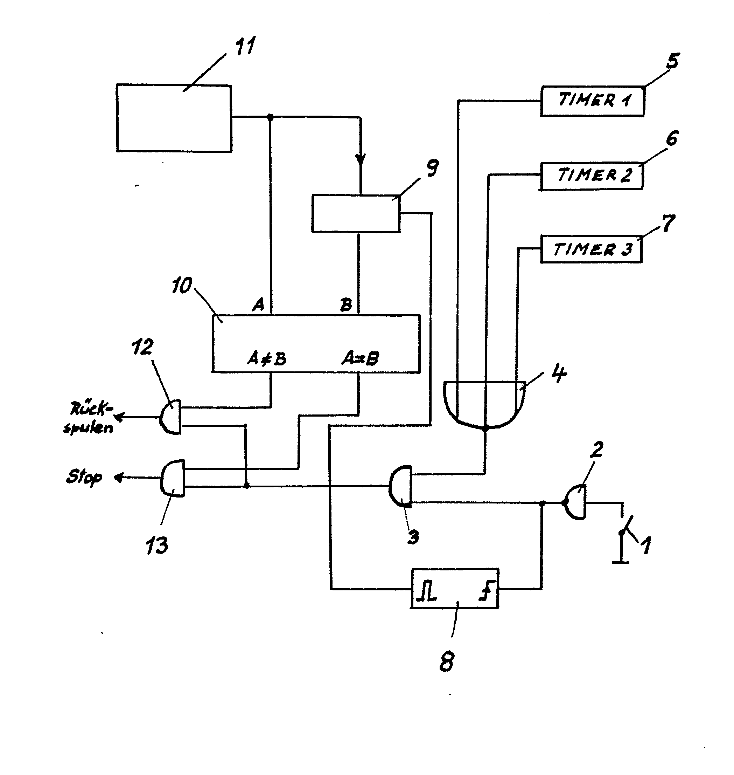

Patentansprüche
------------------

1. Einrichtung zur automatischen Rückspulung der Magnetbandkassette eines Recorders für Bild und/oder Ton, wobei der
   Recorder mit einem Bandzähler bzw. Bandrestzähler ausgestattet ist und mit vorprogrammierbaren Timern (1 bis N)
   für die Ausführung von automatischen Aufnahmen versehen
   ist, d a d u r c h  g e k e n n z e i c h n e t, daß
   Mittel vorgesehen sind, mittels der nach Beendigung einer
   Aufnahme  das Magnetband automatisch an den Anfang dieser
   Aufnahme zurückgespult wird.

2. Einrichtung nach Anspruch 1, d a d u r c h  g e k e n n-
   z e i c h n e t,
   A.
   daß ein Schalter (1) zur Aktivierung der Timer (5, 6, 7)
   vorgesehen ist, dem ein Inverter (2) nachgeschaltet ist,
   der durch Einschalten des Schalters (1) ein H-Signal sowohl an ein Monoflop (8) wie auch an ein UND-Gatter (3)
   liefert, wobei der Monoflop (8) ein kurzes Ausgangssignal
   als Ladebefehl an einen Zwischenspeicher (9) liefert, der
   am an sich bekannten Bandzähler (11) angeschlossen ist und
   auf den Ladebefehl den momentanen Zahlenwert des Bandzählers (11) abspeichert,
   B.
   daß am zweiten Eingang des UND-Gatters (3) der Ausgang
   eines NOR-Gatters (4) angeschlossen ist, mit dessen Eingängen die Timer (5, 6, 7) verbunden sind, von denen
   nach dem Einschalten des Schalters (1) mindestens einer
   im Betrieb ist und so am Ausgang des NOR-Gatters (4) ein
   L-Signal erscheint, wodurch das nachfolgende UND-Gatter (3)

Deutsche Thomson-Brandt GmbH
Postfach 20 60
7730 Villingen-Schwenningen

6. Februar 1984

T-PA 482

**0154161**

ebenso wie die nachfolgenden UND-Gatter (12) und (13)
gesperrt werden, dagegen wird das NOR-Gatter (4) nach
Abarbeiten aller Programmierungen an seinem Ausgang ein
H-Signal abgeben, das über das UND-Gatter (3) an die
UND-Gatter (12) und (13) gelangt,

C.
daß ein Vergleicher (10) so angeordnet ist, daß er an
seinen Eingängen (A) und (B) mit dem Bandzähler (11) der
nunmehr rückwärts zählt, bzw. dem Zwischenspeicher (9)
verbunden ist, der die Bandlängenänderung durch Vergleich
des nach Abarbeiten der Timer erreichten Zählerstandes mit
dem gespeicherten Anfangsstand erfaßt und im Falle der Ungleichheit von (A) und (B) über das UND-Gatter (12) die
Rückspulung des Bandes auslöst bis die Gleichheit von (A)
und (B), also dem Ausgangsstand der Bandkassette bei Einschaltung der Timerfunktion, über das UND-Gatter (13) der
Stop-Befehl erfolgt, wobei gleichzeitig das UND-Gatter (12)
abgeschaltet wird, und

D.
daß bei Ausschalten des Schalters (1) die Wiedergabe der
automatischen Timeraufnahmen dadurch eingeleitet wird, daß
der Inverter (2) ein L-Signal abgibt, was ebensolche L-
Signale durch das UND-Gatter (3) an den Ausgängen der UND-
Gatter (12) und (13) bewirkt und den Vergleicher (10)
wirkungslos macht.

- 3 -

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| P,A | GB-A-2 129 171 (W.R. WILLIES & CO.)<br>* Zusammenfassung; Seite 2, Zeilen 89-93 * | 1 | G 04 G 15/00<br>G 11 B 15/44 |
| A | EP-A-0 036 497 (GRUNDIG)<br>* Seite 1, Absatz 1 - Seite 3, letzter Absatz * | 1 | |
| A | US-A-4 396 804 (HASHIMOTO)<br>* Spalte 1, Zeile 21 - Spalte 2, Zeile 7 * | 1 | |
| | ----- | | |

RECHERCHIERTE
SACHGEBIETE (Int. Cl.4)

G 04 C 23/00
G 04 G 15/00
G 05 B 19/00
G 11 B 15/00
G 11 B 27/00
H 04 N 5/782

Der vorliegende Recherchenbericht wurde für alle Patentansprüche erstellt.

| Recherchenort<br>BERLIN | Abschlußdatum der Recherche<br>14-05-1985 | Prüfer<br>WIBERGH S.R. |
|---|---|---|